# EUROPÄISCHE PATENTSCHRIFT

(11) **EP 0 688 301 B1**
(45) Veröffentlichungstag und Bekanntmachung des Hinweises auf die Patenterteilung: **09.04.1997**
(21) Anmeldenummer: 94906165.9
(22) Anmeldetag: 28.01.1994
(51) Int. Cl.: C02F 1/32, B01J 19/12, H01J 61/34

(54) **TAUCHLAMPE FÜR EINEN PHOTOCHEMISCHEN REAKTOR UND DEREN VERWENDUNG**
IMMERSION LAMP FOR A PHOTOCHEMICAL REACTOR AND ITS USE
LAMPE IMMERGEE POUR UN REACTEUR PHOTOCHIMIQUE, ET UTILISATION DE LADITE LAMPE

(30) Priorität: 12.03.1993 DE 4307884
(43) Veröffentlichungstag der Anmeldung: 27.12.1995
(73) Patentinhaber: Heraeus Noblelight GmbH, 63450 Hanau (DE)
(72) Erfinder: WOLF, Christoph, D-63533 Mainhausen (DE); DAUS, Manfred, D-63599 Biebergemünd (DE)
(74) Vertreter: Kühn, Hans-Christian
(86) Internationale Anmeldenummer: EP9400241
(87) Internationale Veröffentlichungsnummer: WO9420418

(56) Entgegenhaltungen:
- AU-B- 4 555 789
- DE-C- 855 397
- NL-A- 9 001 582
- PATENT ABSTRACTS OF JAPAN vol. 15, no. 512 (C-0898) 26. Dezember 1991 & JP,A,03 224 675 (HOUSHIN KAGAKU SANGIYOUSHIYO K.K.) 3. Oktober 1991

## Beschreibung

Die Erfindung betrifft eine Tauchlampe für einen photochemischen Reaktor mit einer Entladungslampe, welche in einen Außenkolben eingesetzt ist und einen von einem Kühlmedium durchströmten Lampenkolben mit sich axial gegenüberliegenden, mechanisch stabilen elektrischen Anschlüssen aufweist, die in sich gegenüberliegenden Halterungen gehalten und kontaktiert sind, wobei der Außenkolben rohrförmig ausgebildet ist und wenigstens ein offenes Ende aufweist, das in einen Hohlraum eines Anschlußkopfes zur festen mechanischen Halterung hineinragt, wobei das offene Ende des Außenkolbens von wenigstens einem elastischen Dichtkörper umgeben ist, welcher in axialer Richtung gesehen von zwei aufliegenden unelastischen Platten sandwichartig umgeben ist, von denen wenigstens eine Ausnehmungen zur Durchführung des Endes des Außenkolbens und zur Durchführung von Schraubbolzen aufweist sowie deren Verwendung.

Aus der NL-A-9001 582 ist eine Tauchlampe zur Sterilisierung einer Flüssigkeit wie Wasser mittels UV-C-Strahlung bekannt, bei welcher das Außenrohr der Tauchlampe zwischen einem Reaktionsbehälter und einem Anschlußkopf fixiert ist, wobei die Fixierung unter Verwendung von zwei elastischen Dichtringen, zwei Anpreßteilen, einem Stützteil und mehreren Schraubbolzen in zwei sich axial gegenüberliegenden Anschlußköpfen erfolgt.

Die zu bestrahlende Flüssigkeit wird durch einen von zwei Quarzglasrohren gebildeten ringförmigen Kanal zwischen den Anschlußköpfen geführt, wobei sich die Entladungslampe im Bereich der Achse der konzentrisch angeordneten Quarzglasrohre befindet.

Im Prospekt Heraeus Original Hanau D 310625/2C 9.89NN PK, der W. C. Heraeus GmbH, ist auf Seite 13 eine Tauchlampe nach dem Aufbausystem mit Hg-Hochdruckstrahler angegeben. Wie der Abb. 8 zu entnehmen ist, ist der Strahler über eine Strahlerhalterung mit Zuleitung im Tauchrohr mittels Schellen und Dichtungen befestigt, wobei sich das Tauchrohr wiederum in einem Kühlrohr mit Schellen und Dichtungen befindet. Das Tauchrohr wird dabei über einen Einlaßstutzen und einen Auslaßstutzen in der Kopfplatte mit einem interten Gas bespült. Das Kühlrohr bietet die Möglichkeit einer Wasserkührung zwischen Tauchrohr und Reaktionsgut. Die Verbindung von Kopfplatte, bzw. Tauchlampenkopf mit dem Tauchrohr sowie die Verbindung des Tauchrohres mit dem Kühlrohr, erfolgt über Normflanschverbindungen.

Weiterhin ist aus der DE-PS 855 397 eine Tauchlampe mit einem Quecksilberhochdruckstrahler bekannt, der im Inneren eines einseitig geschlossenen Außenkolbens untergebracht ist und in dem für den Strahlenaustritt vorgesehenen Bereich aus durchsichtigem Quarzglas, in seinem übrigen Bereich aus undurchsichtigen Quarzglas besteht. Der Außenkolben wird mittels einer umlaufenden Stopfbuchsendichtung in einer Öffnung der Wandung des Bestrahlungsgefäßes dichtend fixiert; der Außenkolben ist durch einen dosenförmigen Anschlußkopf mit Stromzuteilung und Luftkühlanschluß abgeschlossen, wobei der Anschlußkopf mittels Schelle am oberen Ende des Außenkolbens befestigt ist.

Als problematisch erweist sich die Montage bei Auswechseln des Außenkolbens bzw. der Entladungslampe, da hierbei Schellen und Dichtungen besonders sorgfältig gehandhabt werden müssen, um ausreichende Stabilität und Dichtigkeit zu gewährleisten.

Weiterhin beschreibt die US-PS 3617701 ein elektrisches Heizelement, das von einem einseitig geschlossenen Quarzglasrohr als Tauchrohr umgeben ist und mit seinem offenen Ende in einem Anschlußkopf mittels Epoxidharzverklebung dichtend gehaltert ist.

Auch hier erweisen sich Montage bzw. Austausch des Quarzglasrohres aufgrund der Verklebung als problematisch, da zur Erzielung einer ausreichenden Stabilität und Dichtigkeit ein hoher fachmännischer Aufwand erforderlich ist.

Die Aufgabe der Erfindung ist es, eine mechanisch feste, dichtende und spannende Halterung an einem offenen Ende eines Außenkolbens einer Tauchlampe zu schaffen, wobei die Halterung eine einfache Montage, insbesondere bei Wechsel des Außenkolbens bzw. Wechsel der Entladungslampe ermöglichen soll.

Die Aufgabe wird durch die kennzeichnenden Merkmale des Anspruchs 1 gelöst.

Bevorzugte Ausgestaltungen der Erfindung sowie deren Verwendung sind in den Unteransprüchen angegeben.

Als vorteilhaft erweist es sich, daß die Dichtung aus modulartigen Elementen besteht, so daß je nach Länge des Strahlers bzw. je nach dem auf den Außenkolben wirkenden Strömungsdruck eine optimale Anpassung mittels einzelner oder mehrerer modulartiger Dichtungselemente mit ausreichender Stabilität erzielt werden kann. Ein weiterer Vorteil ist darin zu sehen, daß ein rascher Wechsel von Außenkolben bzw. Entladungslampe durch Verzicht auf Härtungszeiten von Klebematerialien erzielbar ist.

Im folgenden ist der Gegenstand der Erfindung anhand der Figuren 1, 2 und 3 näher erläutert.
Figur 1 zeigt im Längsschnitt eine Tauchlampe mit eingesetzter Strahlerlampe, wobei durch Aufbruch im Bereich der Entladungslampe eine verkürzte Darstellung gewählt wurde;
Figur 2 zeigt einen um 90° gedrehten Längsschnitt der Tauchlampe, wobei ebenfalls durch Aufbruch im Bereich der Entladungslampe eine verkürzte Darstellung gewählt ist;
Figur 3 zeigt in schematischer Darstellung eine Draufsicht des Dichtkörpers.

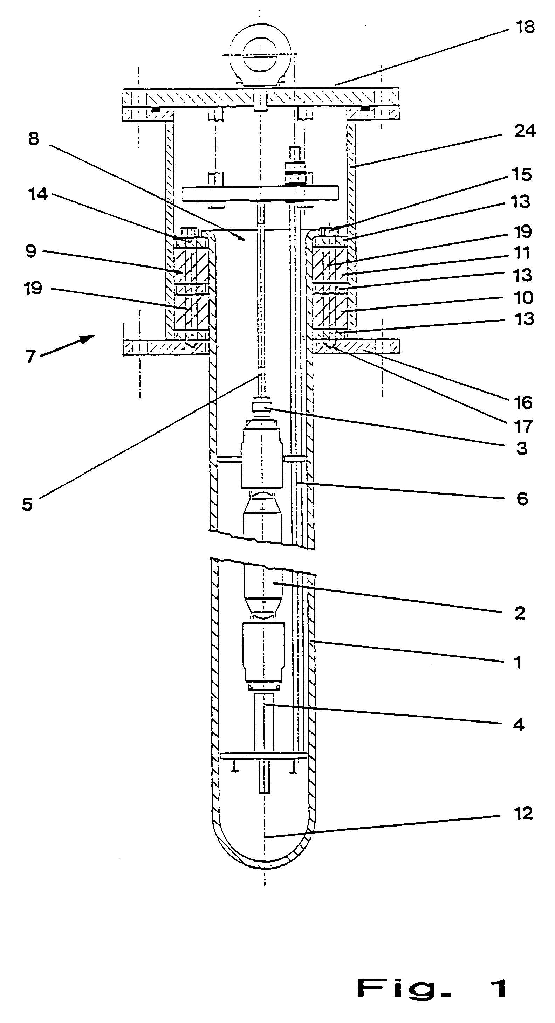

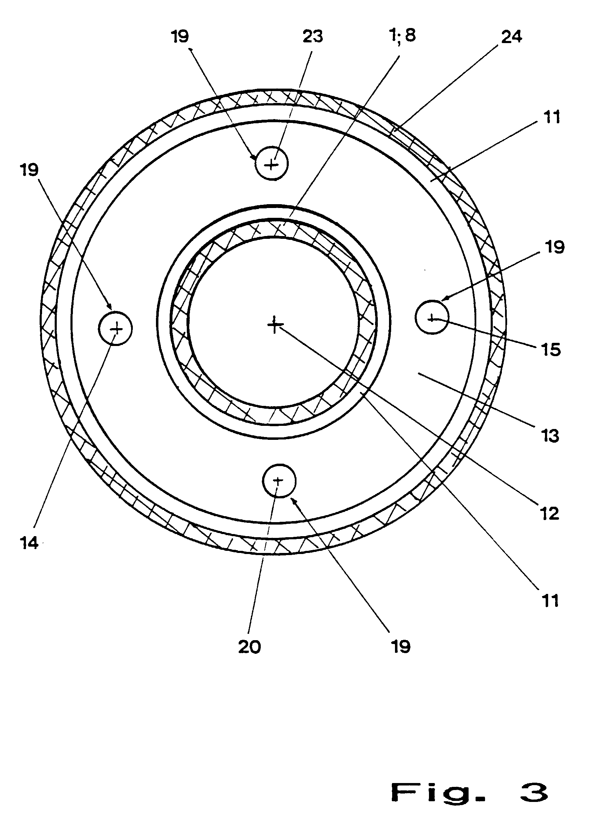

Gemäß Figur 1 weist die Tauchlampe einen Außenkolben 1 auf, in dessen Innerem sich die Entladungslampe 2 befindet, welche über die Kontakte 3 und 4 sowie die zugehörigen Führungs- und Kontaktierungsstäbe 5 und 6 mit der Kontaktierungsvorrichtung im Anschlußkopf 7 elektrisch und mechanisch verbunden ist; das offene Ende 8 des einseitig geschlossenen Außenkolbens 1 ragt in einen Hohlraum 9 des Anschlußkopfes 7, welcher als Hohlzylinder mit einem größeren Innendurchmesser als der Außendurchmesser des ebenfalls zylindrisch ausgebildeten offenen Endes 8 des Außenkolbens 1 ausgestattet ist. Zwischen der Innenwand des Hohlraums 9 und dem oberen Ende 8 sind zwei Dichtkörper 10 und 11 koaxial zur Achse 12 des Außenkolbens 1 aufgebracht, wobei in Achsrichtung gesehen, die Dichtkörper 10 und 11 jeweils von ringförmigen unelastischen Platten 13 umgeben sind, wobei diese Platten, wie nachstehend der Figur 3 ersichtlich ist, mit Ausnehmungen zur Durchführung des Außenkolbens und der Durchführung von Schraubbolzen versehen sind. Die Schraubbolzen werden entlang der schematisch dargestellten, gebrochenen Linien 14 und 15 eingeführt und anschließend mittels einer aufgesetzten Mutter bzw. durch Einschrauben in den unteren Flansch 16 des Anschlußkopfes 7 so befestigt, daß die Dichtkörper 10 und 11 aufgrund des entlang der Achse 12, d.h. in axialer Richtung ausgeübten Drucks, so deformieren, daß sie sowohl an der Innenwand des Hohlraums 9 als auch an der äußeren Wand des offenen Endes 8 des Außenkolbens 1 dichtend anliegen und gleichzeitig aufgrund ihrer Elastizität eine feste Halterung bzw. Zentrierung des Außenkolbens bilden; auf diese Weise wird sichergestellt, daß auch ein verhältnismäßig langer Außenkolben bei Strömungsdruck des ihn umgebenden Mediums in seiner zentrischen Lage im Anschlußkopf 7 stabil gehalten wird.

Wie anhand der Figur 1 erkennbar ist, werden die ringförmigen Platten 13 vorzugsweise durch ein Gewinde 17 im Flansch 16 so justiert, daß die ringförmigen unelastischen Platten 13 stets im Abstand sowohl zur Innenwand des Hohlraums 9 als auch zum oberen Ende 8 des Anschlußkolbens 1 gehalten sind, während sich die in radialer Richtung nach innen und nach außen ausdehnenden Dichtkörper 10 und 11 dichtend und mit ausreichender mechanischer Festigkeit sowohl das obere Ende 8 als auch die Innenwand des Hohlraumes 9 berühren. Die hier nur schematisch dargestellten Schraubbolzen 19 werden vor dem Aufsetzen der Kopfplatte 18 des Anschlußkopfes 7 von oben durch die Öffnungen 14, 15 eingesetzt und mittels der Gewinde 17 in Flansch 16 verschraubt. Auf diese Weise ist ein verhältnismäßig einfacher Wechsel von Außenkolben 1 bzw. Entladungslampe 2 möglich, da zur Demontage lediglich Kopfplatte 18 vom Anschlußkopf 7 zu entfernen ist und die Schrauben entlang der dargestellten Linien 15 und 15 so weit zu lösen sind, daß der Preßdruck auf die Dichtkörper entfällt, wobei dann das obere Ende 8 des Außenkolbens 1 gegenüber dem Anschlußkopf 7 auf einfache Weise zu lösen ist und beispielsweise nach oben herausgezogen werden kann.

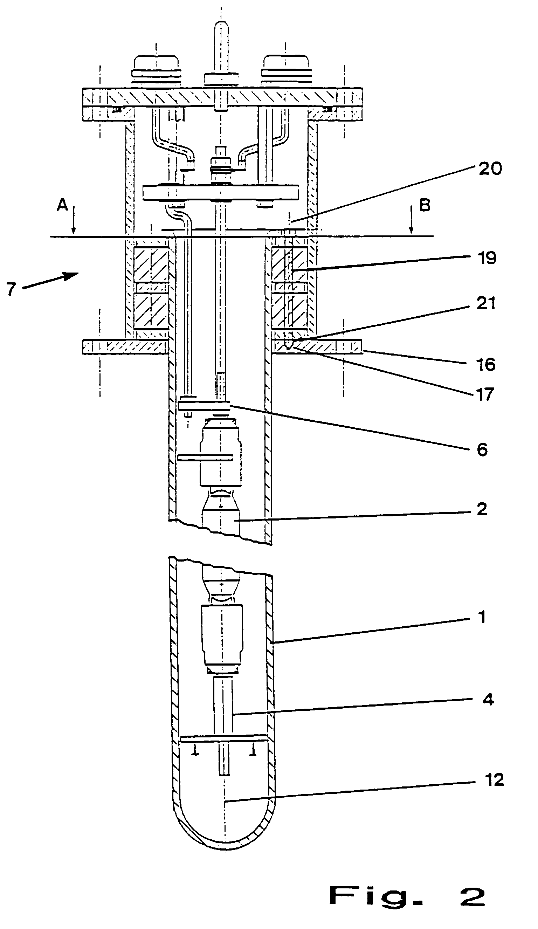

Figur 2 zeigt den um 90° gedrehten Längsschnitt der anhand Figur 1 dargestellten Tauchlampe, wobei die Bezugsziffern so weit wie möglich übernommen wurden, so daß sich eine eingehende Erläuterung erübrigt; zur besseren übersicht ist anhand dieser Figur der Einsatz eines Schraubbolzens 19 entlang einer schematisch dargestellten Linie 20 gezeigt, wobei das Gewinde 21 des Schraubbolzens 19 in einem sacklochartigen Gewinde 17 eingeschraubt ist; der Einsatz eines sacklochartigen Gewindes ist zum Erhalt der Dichtigkeit des Flansches 16 des Anschlußkopfes 7 gegenüber der darunter befindlichen Flüssigkeit erforderlich.

Wie nachstehend anhand Figur 3 noch erläutert wird, ist das offene Ende 8 des Außenkolbens 1 von mehreren solcher Schraubbolzen 19 umgeben, wobei dies auch für die Verbindung entlang der Linien 14 und 15 der Figur 1 zutrifft.

Figur 3 zeigt eine Draufsicht auf das aus ringförmigen Platten 13 und Dichtkörpern 10 und 11 bestehende Dichtelement entlang eines Schnittes AB gemäß Figur 2.

Nach Figur 3 ist in der Draufsicht von oben, die auf dem oberen Dichtkörper 11 aufliegende, ringförmige, unelastische Platte 13 erkennbar, welche die auch durch den Dichtkörper führenden Öffnungen 14, 15 entland der Linien 20 und 23 aufweist, von denen die über die jeweilige Öffnung ragenden Köpfe der Bolzen 19 erkennbar sind. Unterhalb der ringförmigen unelastischen Platte 13 ist der mittels Preßdichtung sich in radialer Richtung erstreckende Dichtkörper 11 erkennbar, welcher elastisch dichtend an dem im Schnitt dargestellten oberen Ende 8 des Außenkolbens 1 anliegt und in radialer Außenrichtung an der Innenwand des Hohlraums 9 anliegt, wobei die den Hohlraum umgebende Wand mit Bezugsziffer 24 bezeichnet ist.

Der Innendurchmesser der unelastischen Platten ist im zusammengepreßten Zustand des bzw. der Dichtkörper stets größer als der der Dichtkörper, während der Außendurchmesser der Platten im zusammengepreßten Zustand stets kleiner ist. Das Verhältnis der Dicke der unelastischen Platten zur Dicke der Dichtkörper liegt im Bereich von 1:2,5 bis 1:10, vorzugsweise im Bereich von 1:3,5.

Als Werkstoff hat sich für die unelastischen Platten insbesondere VA-Stahl erwiesen, während die Dichtkörper vorzugsweise aus einem säurefesten, UV-beständigen elastischen Werkstoff wie beispielsweise Viton bestehen.

## Patentansprüche

1. Tauchlampe für einen photochemischen Reaktor mit einer Entladungslampe (2), welche in einen von einem Kühlmedium durchströmten Außenkolben (1) eingesetzt ist und einen Lampenkolben mit sich axial gegenüberliegenden, mechanisch stabilen elektrischen Anschlüssen aufweist, die in sich gegenüberliegenden Halterungen gehalten und kontaktiert sind, wobei der Außenkolben rohrförmig ausgebildet ist und wenigstens ein offenes Ende (8) aufweist, das in einen Hohlraum eines Anschlußkopfes (7) zur festen mechanischen Halterung hineinragt, wobei das offene Ende des Außenkolbens (1) von wenigstens einem elastischen Dichtkörper (10, 11) umgeben ist, welcher in axialer Richtung gesehen von zwei aufliegenden unelastischen Platten (13) sandwichartig umgeben ist, von denen wenigstens eine Ausnehmungen zur Durchführung des Endes (8) des Außenkolbens (1) und zur Durchführung von Schraubbolzen (19) aufweist, dadurch gekennzeichnet, daß der Außenkolben von Inertgas durchströmt wird und ein offenes Ende aufweist, das an der Innenwand des Anschlußkopfes (7) fixiert ist, wobei durch Pressung mittels Schraubbolzen (19) der elastischen Dichtkörper (10, 11) in radialer Richtung so deformiert ist, daß er sowohl an der Außenwand am Ende (8) des Außenkolbens als auch an der Innenwand des Hohlraumes (9) dichtend anliegt und den Außenkolben (1) im Anschlußkopf (7) zentrierend fixiert.

2. Tauchlampe nach Anspruch 1, dadurch gekennzeichnet, daß wenigstens zwei Dichtkörper (10, 11) zueinander axial entlang der Achse (12) des Außenkolbens (1) angeordnet sind, zwischen denen eine einzige unelastische Platte (13) angeordnet ist.

3. Tauchlampe nach Anspruch 1 oder 2, dadurch gekennzeichnet, daß die innenwand des Hohlraums (9) im Dichtungsbereich des Anschlußkopfes (7) als Hohlzylinder ausgebildet ist.

4. Tauchlampe nach einem der Ansprüche 1 bis 3, dadurch gekennzeichnet, daß der Anschlußkopf (7) einen unteren Flansch (16) mit Durchführungsöffnung für das obere Ende (8) des Außenkolbens (1) aufweist, wobei auf der der Entladungslampe abgewandten Seite des Flansches die Durchführungsöffnung umgebenden Sacklochöffnungen (17) mit Gewinde zur Aufnahme der Enden der Schraubbolzen (19) vorgesehen sind.

5. Tauchlampe nach einem der Ansprüche 1 bis 4, dadurch gekennzeichnet, daß der Außenkolben (1) aus einem einseitig geschlossenen Rohr besteht.

6. Tauchlampe nach einem der Ansprüche 1 bis 4, dadurch gekennzeichnet, daß der Außenkolben (1) beidseitig mit einem offenen Ende versehen ist, welches jeweils mittels Dichtkörper (10, 11) und unelastischer Platten (13) und Schraubbolzen in sich gegenüberliegenden Anschlußköpfen mittels Gewinde im jeweiligen Flansch zentrierend und dichtend gehalten ist.

7. Verwendung der Tauchlampe nach einem der Ansprüche 1 bis 6 in einem photochemischen oder UV-Oxidationsprozeß.

## Claims

1. An immersion lamp for a photochemical reactor with a discharge lamp (2), which is inserted into an outer bulb (1) having a cooling medium flowing through it and has a lamp bulb with mechanically stable electrical connections lying axially opposite each other, which are held in mountings lying opposite each other and are contacted, in which the outer bulb is constructed in a tubular shape and has at least one open end (8), which projects into a cavity of a connection head (7) for secure mechanical mounting, in which the open end of the outer bulb (1) is surrounded by at least one elastic sealing body (10, 11) which, viewed in axial direction, is surrounded in the manner of a sandwich by two non-elastic plates (13) lying thereon, at least one of which plates (13) has recesses for carrying through the end (8) of the outer bulb (1) and for carrying through screw bolts (19), characterised in that the outer bulb has inert gas flowing through it and has an open end which is fixed to the inner wall of the connection head (7), in which through pressure by means of screw bolts (19) the elastic sealing body (10, 11) is deformed in radial direction so that it lies in a sealing manner against both the outer wall at the end (8) of the outer bulb and also against the inner wall of the cavity (9) and fixes the outer bulb (1) in the connection head (7) in a centering manner.

2. An immersion lamp according to Claim 1, characterised in that at least two sealing bodies (10, 11) are arranged axially to each other along the axis (12) of the outer bulb (1), between which a single non-elastic plate (13) is arranged.

3. An immersion lamp according to Claim 1 or 2, characterised in that the inner wall of the cavity (9) is constructed in the sealing region of the connection head (7) as a hollow cylinder.

4. An immersion lamp according to one of Claims 1 to 3, characterised in that the connection head (7) has a lower flange (16) with a passage opening for the upper end (8) of the outer bulb (1), in which on the side of the flange facing away from the discharge lamp, blind hole openings (17) with a thread to receive the ends of the screw bolts (19) are provided surrounding the passage opening.

5. An immersion lamp according to one of Claims 1 to 4, characterised in that the outer bulb (1) consists of a tube which is closed on one side.

6. An immersion lamp according to one of Claims 1 to 4, characterised in that the outer bulb (1) is provided on both sides with an open end, which is held in each case by means of sealing bodies (10, 11) and non-elastic plates (13) and screw bolts in connection heads, lying opposite each other, by means of a thread in the respective flange in a centering and sealing manner.

7. The use of the immersion lamp according to one of Claims 1 to 6 in a photochemical or UV-oxidation process.

## Revendications

1. Lampe immergée pour un réacteur photochimique comportant une lampe de décharge (2) qui est insérée dans une ampoule extérieure (1) parcourue par un fluide réfrigérant et présente une ampoule de lampe avec des raccords électriques qui sont situés axialement l'un en face de l'autre, sont mécaniquement rigides et sont maintenus et mis en contact dans des fixations situées l'une en face de l'autre, l'ampoule extérieure étant conçue en forme de tube et présentant au moins une extrémité ouverte (8) qui, pour la fixation mécanique rigide, pénètre dans un espace creux d'une tête de raccordement (7), l'extrémité ouverte de l'ampoule extérieure (1) étant entourée d'au moins un bloc d'étanchéité élastique (10, 11) qui, vu selon la direction axiale, est entouré, à la façon d'un sandwich, par deux plaques non élastiques (13) qui reposent sur eux et dont au moins l'une présente des évidements pour le passage de l'extrémité (8) de l'ampoule extérieure (1) et pour le passage de tiges filetées (19) caractérisée par le fait que l'ampoule extérieure est parcourue par un gaz inerte et présente une extrémité ouverte qui est fixée contre la paroi intérieure de la tête de raccordement (7), le bloc d'étanchéité élastique (10, 11), sous l'action de la pression exercée par des tiges filetées (19), se déformant suffisamment selon la direction radiale pour s'appuyer, avec étanchéité, aussi bien contre la paroi extérieure à l'extrémité (8) de l'ampoule extérieure que contre la paroi intérieure de l'espace creux ( 9) et fixant, en la centrant, l'ampoule extérieure (1) dans la tête de raccordement (7).

2. Lampe immergée selon la revendication 1, caractérisée par le fait qu'au moins deux blocs d'étanchéité (10, 11) sont disposés, axialement l'un par rapport à l'autre, le long de l'axe (12) de l'ampoule extérieure (1), blocs entre lesquels est disposée une unique plaque non élastique (13).

3. Lampe immergée selon la revendication 1 ou 2, caractérisée par le fait que la paroi intérieure de l'espace creux (9) a la forme d'un cylindre creux dans la zone d'étanchéité de la tête de raccordement (7).

4. Lampe immergée selon l'une des revendications 1 à 3, caractérisée par le fait que la tête de raccordement (7) présente une bride inférieure (16) avec ouverture de passage pour l'extrémité supérieure (8) de l'ampoule extérieure (1), étant précisé que, sur la face de la bride opposée à la lampe de décharge, sont prévues des ouvertures aveugles (17), entourant l'ouverture de passage, avec un filetage pour recevoir les extrémités des tiges filetées (19).

5. Lampe immergée selon l'une des revendications 1 à 4, caractérisée par le fait que l'ampoule extérieure (1) est constituée d'un tube fermé d'un côté.

6. Lampe immergée selon l'une des revendications 1 à 4, caractérisée par le fait que l'ampoule extérieure (1) présente des deux côtés une extrémité ouverte dont chacune est maintenue, avec centrage et étanchéité, au moyen de blocs d'étanchéité (10, 11) et de plaques non élastiques (13) et de tiges filetées, dans des têtes de raccordement situées l'une en face de l'autre, au moyen de filetages dans la bride respective.

7. Emploie de la lampe immergée selon l'une des revendication 1 à 6 dans un processus photochimique ou dans une processus d'oxydation par rayons ultraviolets.
